# EUROPÄISCHE PATENTSCHRIFT

(11) **EP 2 415 336 B1**
(45) Veröffentlichungstag und Bekanntmachung des Hinweises auf die Patenterteilung: **01.03.2017**
(21) Anmeldenummer: 11175684.7
(22) Anmeldetag: 28.07.2011
(51) Int. Cl.: A01B 39/04, A01B 39/22, A01B 19/02, A01B 35/24, A01B 23/02

(54) **Bodenbearbeitungsgerät**
Soil cultivation device
Appareil de traitement des sols

(30) Priorität: 06.08.2010 DE 202010011146 U
(43) Veröffentlichungstag der Anmeldung: 08.02.2012
(73) Patentinhaber: Treffler, Paul, 86554 Pöttmes-Echsheim (DE)
(72) Erfinder: Treffler, Paul, 86554 Pöttmes-Echsheim (DE)
(74) Vertreter: Charrier Rapp & Liebau

(56) Entgegenhaltungen:
- DE-A1-102007 008 616
- DE-B- 1 219 720
- DE-U1- 20 115 048
- US-A- 2 772 618
- US-A- 4 205 615
- US-A- 4 304 306

## Beschreibung

Die Erfindung betrifft ein Bodenbearbeitungsgerät, insbesondere zur Unkrautbekämpfung und Bodenlockerung, nach dem Oberbegriff des Anspruchs 1.

Ein derartiges Bodenbearbeitungsgerät ist aus der DE 201 15 048 U1 bekannt. Dieses weist mehrere an einem Tragrahmen schwenkbar angeordnete Striegelzinken auf, die durch jeweils eine Feder vorgespannt sind. Die Federn sind einerseits mit den jeweiligen Striegelzinken und andererseits über ein Zugseil mit einem am Tragrahmen angeordneten Stellelement verbunden. Bei den bekannten Bodenbearbeitungsgeräten dieser Art sind die Striegelzinken in der Regel an ein Rohr angeschweißt, das an seinen Enden über Lagerzapfen und entsprechende Lagerschalen an dem Tragrahmen angelenkt ist. Diese Schweißkonstruktion ist jedoch relativ aufwendig. Außerdem kann es an den Schweißnähten nach der Vergütung zu unerwünschten Rissen und Zinkenbrüchen kommen.

Die US 4,304,306 zeigt einen Doppelfederzinken, der mittels einer lösbaren Klammer schwenkbar an einer kanalförmigen Befestigungsschiene einer Egge befestigt ist. Der Abschnitt des Zinkens, welcher die zwei Federwicklungen verbindet, wird durch die Klammer beweglich an der Befestigungsschiene gehalten, so dass sich der gesamte Zinken um die Achse seines Befestigungsabschnitts drehen kann. Die Abschnitte des Zinkens auf beiden Seiten der Klammer werden unter Zugspannung gehalten und nicht gebogen. Die Zinken sind einzeln ohne Ausbau der Befestigungsschiene austauschbar.

Die DE 1 219 720 B lehrt einen Eggenzinken aus rundem Federstahldraht, bei dem der gegen den Boden gerichtete wirksame Zinkenteil über einen in Fahrtrichtung verlaufenden gestellfreien Verbindungsteil mit einem am Gestell der Egge befestigten Teil verbunden ist, wobei der Verbindungsteil und der gegen den Boden gerichtete wirksame Zinkenteil etwa senkrecht zueinander verlaufen sowie im wesentlichen geradlinig ausgebildet sind und der Verbindungsteil etwa rechtwinklig in einen etwa lotrechten, nach oben gerichteten, ebenfalls im wesentlichen geradlinigen Befestigungsteil übergeht, derart, dass das ganze Gebilde, von der Seite gesehen, etwa Z-förmig aussieht.

Die DE 10 2007 0086 616 A1 offenbart eine elektronische Zinkendruckverstelleinheit für den Einsatz an Bodenbearbeitungsgeräten für die Pflege von Bodenflächen zwischen Kulturpflanzen, die von einer Zugmaschine bewegt wird, wobei an den Tragrahmen frei bewegliche Zinken in Gerätelängsrichtung angebracht sind und alle Zinken jeweils über ein Drahtseil und eine Zugfeder mit der Verstelleinheit verbunden sind und dadurch gleichzeitig zur Verstellung angesteuert werden.

Aufgabe der Erfindung ist es, ein stabiles und wartungsarmes Bodenbearbeitungsgerät zu schaffen, das einfach herstellbar ist

Diese Aufgabe wird durch ein Bodenbearbeitungsgerät mit den Merkmalen des Anspruchs 1 gelöst. Zweckmäßige Weiterbildungen und vorteilhafte Ausführungsformen der Erfindung sind Gegenstand der Unteransprüche.

Bei dem erfindungsgemäßen Bodenbearbeitungsgerät sind die Striegelzinken in einem Stück aus einem Federstahl gebogen und weisen an ihrem oberen Ende einen quer zur Längsrichtung des Striegelzinkens rechtwinklig umgebogenen Lagerschenkel zur Halterung in einem am Träger angeordneten Lagerteil auf. Die Striegelzinken können somit als reine Biegeteile ohne Schweißnähte hergestellt werden, wodurch die Fertigung erheblich vereinfacht und die Lebensdauer der Striegelzinken erhöht werden kann.

In einer besonders zweckmäßigen Ausführung sind jeweils zwei Striegelzinken durch ein gemeinsames Lagerteil voneinander beabstandet an dem Träger angebracht. Bei den beiden Striegelzinken müssen somit nur die beiden Lagerschenkel zu unterschiedlichen Seiten, d.h. nach rechts oder links, umgebogen werden. Das trägt ebenfalls zur vereinfachten Fertigung bei.

Die Striegelzinken weisen vorzugsweise einen stufenförmig gebogenen mittleren Teil und einen abgewinkelten unteren Endbereich auf. Durch den stufenförmig gebogenen mittleren Teil wird der Striegelzinken abgekröpft, wodurch eine größere Durchgangshöhe erreicht werden kann. An dem mittleren Teil kann ein z.B. aus Gummi hergestelltes Federsicherungselement zur Verhinderung eines Abrutschens der Feder angeordnet sein.

In einer fertigungstechnisch einfachen und kostengünstigen Ausführung ist das Lagerteil aus einem Blech gebogen und enthält eine Halteplatte mit zwei rechtwinklig umgebogenen Seitenteilen sowie und einem halbschalenförmig gebogenen Lagersteg an der Oberseite der Halteplatte.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: einen Träger eines Bodenbearbeitungsgeräts mit mehreren Striegelzinken in einer Rückansicht;
- **Figur 2**: den Träger eines Bodenbearbeitungsgeräts mit einem Striegelzinken in einer Seitenansicht;
- **Figur 3**: eine vergrößerte Detailansicht des eingekreisten Lagerbereichs von Figur 2;
- **Figur 4**: ein Lagerblech in einer Perspektive;
- **Figur 5**: das Lagerblech von Figur 5 in einer Vorderansicht;
- **Figur 6**: eine Schnittansicht entlang der Linie A-A von Figur 5 in einer Vorderansicht;
- **Figur 7**: einen Striegelzinken in einer Seitenansicht und
- **Figur 8**: den Striegelzinken von Figur 7 in einer Draufsicht.

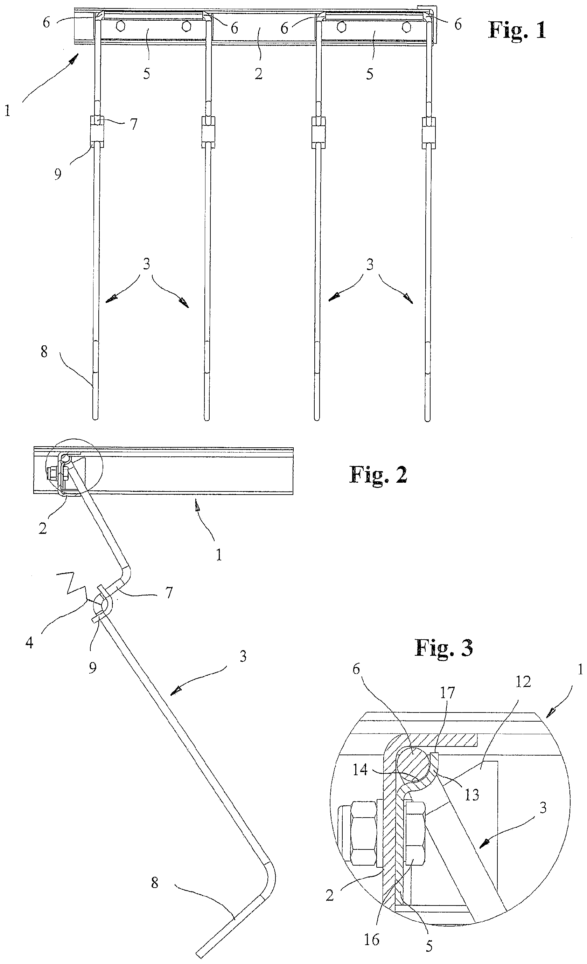

Figur 1 zeigt eine vom Boden beabstandete, rahmenförmige Tragkonstruktion 1 eines Bodenbearbeitungsgeräts mit einem im Querschnitt U-förmigen, quer verlaufenden Träger 2, an dem mehrere parallel nebeneinander angeordnete Striegelzinken 3 schwenkbar gelagert sind und durch eine in Figur 2 schematisch dargestellte Feder 4 in Richtung des Bodens vorgespannt werden. Derartige Bodenbearbeitungsgeräte werden z.B. im landwirtschaftlichen Ackerbau für die Bodenbearbeitung und die Saatbearbeitung von Kulturpflanzungen, insbesondere zur Unkrautbekämpfung im ökologischen Pflanzenbau, eingesetzt.

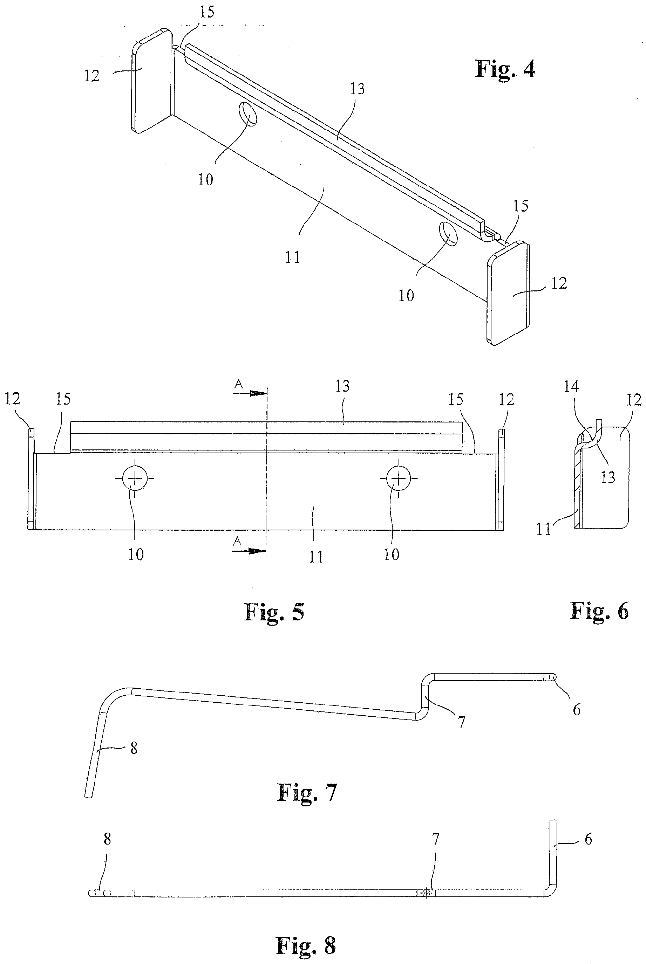

Die in Figur 7 und 8 gesondert dargestellten Striegelzinken 3 sind als reine Biegeteile in einem Stück aus Federstahl gebogen und sind über ein als Blech-Biegeteil ausgebildetes, in den Figuren 4 bis 6 dargestelltes Lagerteil 5 an dem Träger 2 angelenkt. Bei der in Figur 1 dargestellten Ausführung sind jeweils zwei Striegelzinken 3 durch ein gemeinsames Lagerteil 5 voneinander beabstandet an dem quer verlaufenden Träger 2 angebracht.

Wie aus den Figuren 7 und 8 hervorgeht, weisen die aus einem Federstahldraht gebogenen Striegelzinken 3 an ihrem oberen Ende einen quer zur Längsrichtung rechtwinklig umgebogenen Lagerschenkel 6 auf. Der in Zugrichtung des Bodenbearbeitungsgeräts linke Striegelzinken 3 der beiden gemäß Figur 1 durch ein gemeinsames Lagerteil 5 an dem Träger 2 angeordneten Striegelzinken 3 enthält einen nach rechts umgebogenen Lagerschenkel 6, während der rechte Striegelzinken einen nach links umgebogenen Lagerschenkel 6 aufweist. In der Längsrichtung haben die Striegelzinken einen stufenförmig gebogenen mittleren Bereich 7 einen abgewinkelten unteren Endbereich 8. An dem mittleren Bereich 7 kann die Feder 4 angebracht sein. An dem stufenförmig gebogenen mittleren Bereich 7 der Striegelzinkens 3 ist ein in den Figuren 1 und 2 dargestelltes Federsicherungselement 9 angebracht, das z.B. aus Gummi oder einem anderen geeigneten Material hergestellt ist. Durch dieses Federsicherungselement 9 kann ein Abrutschen der Feder 4 verhindern werden.

Das in den Figuren 4 bis 6 in verschiedenen Ansichten gezeigte Lagerteil 5 ist aus einem Blech gebogen und weist eine mit zwei Bohrungen 10 versehene Halteplatte 11 mit zwei rechtwinklig umgebogenen Seitenteilen 12 auf. An der Oberseite der Halteplatte 11 befindet sich zwischen den Seitenteilen 12 ein halbschalenförmig gebogener Lagersteg 13. Die Rundung 14 an der Innenseite des halbschalenförmig gebogenen Lagerstegs 13 ist an den Durchmesser des Striegelzinkens 3 angepasst. Zwischen den Seitenteilen 12 und den Enden des Lagerstegs 13 sind im Lagerteil 5 außerdem Ausnehmungen 15 vorgesehen.

In den halbschalenförmig gebogenen Lagersteg 13 wird ein rechter und linker Striegelzinken 3 mit den jeweils nach rechts bzw. links umgebogenen Lagerschenkeln 6 eingelegt. Dann kann das Lagerteil 5 mit Hilfe von Schrauben 16 an den Träger 2 angeschraubt werden, wie dies in der Detailansicht von Figur 3 gezeigt ist. Das Lagerteil 5 wird derart an den im Querschnitt U-förmigen Träger 2 angeschraubt, dass das obere Ende 17 des halbschalenförmig gebogenen Lagerstegs 13 nahezu mit dem oberen Schenkel des U-förmigen Trägers 2 abschließt. Dadurch werden die Lagerschenkel 6 der Striegelzinken 3 sicher gehalten. Durch die ebenfalls nach oben stehenden Seitenteile 12 wird die seitliche Bewegung des Striegelzinkens 3 beschränkt.

## Patentansprüche

1. Bodenbearbeitungsgerät, das mehrere an einem Träger (2) schwenkbar angeordnete Striegelzinken (3) enthält, die in einem Stück aus einem Federstahl gebogen sind und an ihrem oberen Ende einen quer zur Längsrichtung des Striegelzinkens (3) rechtwinklig umgebogenen Lagerschenkel (6) zur Halterung in einem am Träger (2) angeordneten Lagerteil (5) aufweisen, **dadurch gekennzeichnet, dass** die Striegelzinken (3) einen stufenförmig gebogenen mittleren Teil (7), durch den der Striegelzinken (3) abgekröpft wird, und einen abgewinkelten unteren Endbereich (8) aufweisen, wobei an dem mittleren Teil (7) jeweils eine Feder (4) zur Vorspannung des Striegelzinkens (3) und ein Federsicherungselement (9) zur Verhinderung eines Abrutschens der Feder (4), angeordnet ist.

2. Bodenbearbeitungsgerät nach Anspruch 1, **dadurch gekennzeichnet, dass** jeweils zwei Striegelzinken (3) durch ein gemeinsames Lagerteil (5) voneinander beabstandet an dem Träger (2) angebracht sind.

3. Bodenbearbeitungsgerät nach Anspruch 1 oder 2, **dadurch gekennzeichnet, dass** das Lagerteil (5) aus einem Blech gebogen ist und eine Halteplatte (11) mit zwei rechtwinklig umgebogenen Seitenteilen (12) sowie und einem halbschalenförmig gebogenen Lagersteg (13) an der Oberseite der Halteplatte (11) enthält.

4. Bodenbearbeitungsgerät nach Anspruch 3, **dadurch gekennzeichnet, dass** eine Rundung (14) an der Innenseite des halbschalenförmig gebogenen Lagerstegs (13) an den Durchmesser des Striegelzinkens angepasst ist.

5. Bodenbearbeitungsgerät nach Anspruch 3 oder 4, **dadurch gekennzeichnet, dass** zwischen den Seitenteilen (12) und den Enden des Lagerstegs (13) Ausnehmungen (15) vorgesehen sind.

6. Bodenbearbeitungsgerät nach einem der Ansprüche 1 bis 5, **dadurch gekennzeichnet, dass** das Lagerteil (5) durch Schrauben (16) an dem Träger (2) befestigbar ist.

## Claims

1. Soil cultivation implement containing a plurality of harrow tines (3) which are arranged pivotably on a support (2) and bent from spring steel in one piece and at their upper end have a bearing arm (6) bent round at right angles transversely to the longitudinal direction of the harrow tine (3), for support in a bearing portion (5) arranged on the support (2), **characterised in that** the harrow tines (3) have a central portion (7) bent to a stepped shape, by which the harrowtine (3) is cranked, and an angled lower end region (8), wherein on the central portion (7) are arranged in each case a spring (4) for biasing the harrow tine (3) and a spring fixing element (9) to prevent the spring (4) from slipping.

2. Soil cultivation implement according to claim 1, characterised that in each case two harrow tines (3) are mounted on the support (2) at a distance from each other by a common bearing portion (5).

3. Soil cultivation implement according to claim 1 or 2, **characterised in that** the bearing portion (5) is bent from a metal sheet and contains a retaining plate (11) with two side portions (12) bent round at right angles as well as a bearing web (13) bent to a half-shell shape on the upper side of the retaining plate (11).

4. Soil cultivation implement according to claim 3, **characterised in that** a curvature (14) on the inside of the bearing web (13) bent to a half-shell shape is adapted to the diameter of the harrow tine.

5. Soil cultivation implement according to claim 3 or 4, **characterised in that** recesses (15) are provided between the side portions (12) and the ends of the bearing web (13).

6. Soil cultivation implement according to one of claims 1 to 5, **characterised in that** the bearing portion (5) can be attached to the support (2) by screws (16).

## Revendications

1. Appareil de traitement des sols, qui comprend plusieurs dents d'étrille (3) agencées de manière pivotante au niveau d'un support (2), qui sont courbéesen une seule pièce à partir d'un acier à ressort et présentent au niveau de leur extrémité supérieure une branche d'appui (6) recourbée perpendiculairement transversalement au sens longitudinal de la dent d'étrille (3) pour le maintiendans une pièce d'appui (5) agencée au niveaudu support (2), **caractérisé en ce que** les dents d'étrille (3) présentent une partie médiane (7) courbée de manière étagée, par laquelle ladent d'étrille (3) est coudée, et une zone d'extrémité inférieure coudée (8), dans lequel respectivement un ressort (4) pour la précontrainte de la dent d'étrille (3) et un élément de blocage de ressort (9) pour empêcher un glissement du ressort (4) sont agencés au niveau de la partie médiane (7).

2. Appareil de traitement des sols selon la revendication 1, **caractérisé en ce que** respectivement deux dents d'étrille (3) sont montées sur le support (2)espacées l'une de l'autre par une pièce d'appui (5) commune.

3. Appareil de traitement des sols selon la revendication 1 ou 2, **caractérisé en ce que** la pièce d'appui (5) est courbéeà partir d'une tôle et comporte une plaque de maintien (11) avec deux parties latérales (12) recourbées perpendiculairement ainsi que et uneentretoise d'appui (13) courbée en forme de demi-coque au niveau de la face supérieure de la plaque de maintien (11).

4. Appareil de traitement des sols selon la revendication 3, **caractérisé en ce qu'**un arrondi (14) au niveau de la face intérieurede l'entretoise d'appui (13) courbée en forme de demi-coqueest adapté au diamètre de la dent d'étrille.

5. Appareil de traitement des sols selon la revendication 3 ou 4, **caractérisé en ce que** des évidements (15) sont prévus entre les parties latérales (12) et les extrémités de l'entretoise d'appui (13).

6. Appareil de traitement des sols selon l'une quelconque des revendications 1 à 5, **caractérisé en ce que** la pièce d'appui (5) peut être fixéeau support (2) par des vis (16).
